# EUROPÄISCHE PATENTSCHRIFT

(11) **EP 1 881 060 B1**
(45) Veröffentlichungstag und Bekanntmachung des Hinweises auf die Patenterteilung: **16.09.2009**
(21) Anmeldenummer: 06015063.8
(22) Anmeldetag: 19.07.2006
(51) Int. Cl.: C12C 7/04, B02C 4/06

(54) **Nassschrotmühle**
Wet grist mill
Broyeur humide de graines

(43) Veröffentlichungstag der Anmeldung: 23.01.2008
(73) Patentinhaber: KRONES AG, 93073 Neutraubling (DE)
(72) Erfinder: Gratzer, Harald, 85459 Berglern (DE); Lohner, Ditmar, 85354 Freising (DE); Steindorf, Thilo, 85385 Attenkirchen (DE)
(74) Vertreter: Grünecker, Kinkeldey, Stockmair & Schwanhäusser Anwaltssozietät

(56) Entgegenhaltungen:
- DE-A1- 1 442 319
- DE-A1- 1 517 765
- DE-A1- 2 523 368
- DE-A1- 2 533 555

## Beschreibung

Die Erfindung bezieht sich auf eine Nassschrotmühle.

Aus der DE 1517 765 ist ein Betriebsverfahren für eine Braumalzweichanlage und ein Maischebereitungsgerät bekannt. Das Maischebereitungsgerät enthält eine Schrotmühle mit einem Paar von Quetschwalzen, die das von oben zugeführte Schrot quetschen und nach unten in einen Aufnahmeraum fallen lassen. Der Aufnahmeraum enthält einen Trichterbereich, in den eine Wasserzufuhrleitung mit einer im Wesentlichen vertikal nach unten gerichteten Auslassöffnung einmündet. Die gebildet Maische wird dann durch eine Pumpe zum Sudhaus geleitet. Das dem Maischen vorangehende Weichen des Malzes findet in einem Weichgefäß oberhalb der Quetschwalzen statt, wobei das Wasser zwischen dem Weichgefäß und der Quetschwalze in einem Kreislauf geführt wird, in dem ein Auffanggefäß für Wasser vorgesehen ist. Durch diese Kreislaufführung würde jedoch zu viel der bereits fertigen Maische wieder in das Weichgefäß zurückgeführt, wenn dem gequetschten Schrot erlaubt würde, sich unterhalb der Quetschwalzen anzusammeln.

Eine weitere Nassschrotmühle ist aus der EP 1 001 015 bekannt. Die bekannte Nassschrotmühle enthält eine Quetscheinrichtung, mit der vorab geweichtes Malz geschrotet wird, wobei der Malzinhalt, d.h. der Mehlkörper, zerkleinert und aus den Spelzen gedrückt wird. Die Mühle enthält die üblichen Walzenpaare, die oberhalb eines Aufnahmeraums für das Schrotgut angeordnet sind. Das Schrotgut fällt durch Schwerkrafteinwirkung in den Aufnahmeraum, der sich im unteren Teil trichterförmig verengt und zu einer Auslassöffnung führt, der eine Fördereinrichtung, üblicherweise eine Förderpumpe, zugeordnet ist. Das Schrotgut sammelt sich im unteren Bereich des Aufnahmeraumes und wird durch die Fördereinrichtung abgeführt. Wie in dieser Druckschrift ausführlich erläutert wird, bereitet das Abführen des Schrotgutes Schwierigkeiten, da der feingeschrotete, trockene Mehlkörper bei ungenügender Wasserzufuhr und schlechter Durchmischung zum Aufbauen des Schrots neigt, was die Förderleistung herabsetzt.

Bei der bekannten Nassschrotmühle ist deshalb eine Wasserzufuhreinrichtung vorgesehen, die Wasser in den Aufnahmeraum unterhalb der Quetschwalzen aber oberhalb einer durch eine Niveauregelung überwachten Normalfüllstandslinie einbringt und dadurch die Pumpfähigkeit des eingemaischten Schrotgutes verbessert. Die Wassereinleiteinrichtung enthält eine sich durch die Wandung des Aufnahmeraums hindurch erstreckende Düsenanordnung mit einer ersten und einer zweiten Düse, wobei die erste Düse so ausgebildet ist, dass sie einen oberen und einen unteren Teilstrom bildet. Der obere Teilstrom wird auseinandergespreizt und ist zum Zentrum des Aufnahmeraums und geringfügig nach oben gerichtet. Dieser obere Teilstrom fällt dann im Wesentlichen gleichmäßig auf die Oberfläche des angesammelten Schrotgutes. Der untere Teilstrom wird entlang der Wandung des Aufnahmeraums und insbesondere entlang der Wandung seines unteren trichterfömigen Bereichs in Richtung auf die Auslassöffnung geleitet. Es hat sich jedoch herausgestellt, dass auch mit dieser Technik das Problem des Verklumpens und der darauf zurückzuführenden schlechten Pumpleistung nicht optimal gelöst werden kann, insbesondere dann, wenn sehr dicke Maischen, wie sie z. B. für ein "hight gravity brewing " eingesetzt werden (Mischungsverhältnis z. B. 250 kg Wasser auf 100 kg geschrotetes Malz).

Es ist weiterhin bereits versucht worden, beispielsweise in der DE 42 13 204 oder der DE 25 33 555 Wasser durch Verteiler in das Schrotgut zu bringen, die oberhalb der Normalfüllstandslinie von der Seite her in den Aufnahmeraum hineinragen und entweder auf die Oberfläche des angesammelten Schrots oder in Richtung auf den Mahlspalt der Quetschwalzen gerichtet sind. Aber auch hier sind die erwähnten Probleme nicht optimal gelöst.

Der Erfindung liegt somit die Aufgabe zugrunde, eine Nassschrotmühle und ein Verfahren zu ihrem Betrieb bereitzustellen, die zu einem verbessert pumpfähigen Schrot führen.

Die Aufgabe wird bei einer Nassschrotmühle durch die Merkmale des Anspruches 1 und bei einem Verfahren durch die Merkmale des Anspruches 9 gelöst.

Durch die erfindungsgemäße Ausgestaltung wird das Wasser direkt in das Innere des sich absetzenden Schrots eingebracht und kann dort optimal wirken. Insbesondere wird erfindungsgemäß das Wasser in Bereiche des Schrots gebracht, die mit den Wassereinleiteinrichtungen des Standes der Technik nicht oder nur unvollständig erreicht werden konnten, d.h. in die Mitte der Schrotmenge nahe an der Pumpe. Es kann also nicht passieren, dass Randschichten des angesammelten Schrots, beispielsweise die obere Schicht des abgesetzten Schrots oder wandseitige Schichten, quellen und eine Barriere gegen ein weiteres Eindringen von Wasser in das Innere der Schrotmasse bilden.

Vorteilhafte Weiterbildungen der Erfindung sind den Unteransprüchen zu entnehmen.

Durch eine sich horizontal in den Aufnahmeraum hinein erstreckende Verteilleitung wird einerseits eine im Wesentlichen gleichmäßige Verteilung und Umlenkung des Schrots über den Querschnitt des Aufnahmeraums erreicht; andererseits behindert die Verteilleitung den freien Fall des Schrots aus der Quetscheinrichtung nur unwesentlich.

Der Anordnung und Größenbemessung der Auslassöffnungen des Verteilers sollte besondere Sorgfalt gewidmet werden. Bevorzugt ist der Verteiler mit einer Gruppe von im Wesentliche nach oben und einer Gruppe von im Wesentlich nach unten weisenden Auslassöffnungen versehen, wobei die Richtung der Auslassöffnungen nicht unbedingt auf einer Vertikalen liegen muss, sondern bevorzugt im Winkel zur Vertikalen verläuft.

Bevorzugt haben die nach oben und die nach unten weisenden Auslassöffnungen unterschiedliche Auslassquerschnitte, wobei die nach oben weisenden Auslassöffnungen einen kleineren Auslassquerschnitt haben können, um das Eindringen von Schrot zu verhindern.

Die Wirkung als Hindernis kann weiter verringert werden, wenn der Verteiler an seiner den Quetschwalzen zugewandeten Oberseite einen Abweisquerschnitt aufweist.

Bevorzugt hat der Verteiler einen im Wesentlichen (recht)winkligen, insbesondere quadratischen, Querschnitt, der auf der Spitze stehend angeordnet ist, so das die dachförmig nach oben weisende Oberseite als Abweiser wirkt.

Sind dem Aufnahmeraum eine Mehrzahl nebeneinander angeordneter Fördereinrichtungen zugeordnet, so sollte der Verteiler bevorzugt symmetrisch zu den Fördereinrichtungen angeordnet sein, da auf diese Weise nur ein Verteiler notwendig ist, der beide Fördereinrichtungen bedient.

Das Einleiten von Wasser schräg zur Lotrechten, d.h. schräg zur Fließrichtung des Schrotgutes im Sammelbereich, bewirkt eine noch bessere Verteilung des Wassers im angesammelten Schrotgut.

Ein Ausführungsbeispiel der Erfindung wird nachfolgend anhand der Zeichnungen näher erläutert. Es zeigen:
- Fig. 1: eine stark schematisierte Darstellung der erfindungsgemäßen Nassschrotmühle in Seitenansicht,
- Fig. 2: eine stark schematisierte Darstellung der erfindungsgemäßen Nassschrotmühle in Vorderansicht, und
- Fig. 3: eine stark schematisierte perspektivische Teildarstellung des erfindungsgemäßen Verteilers.

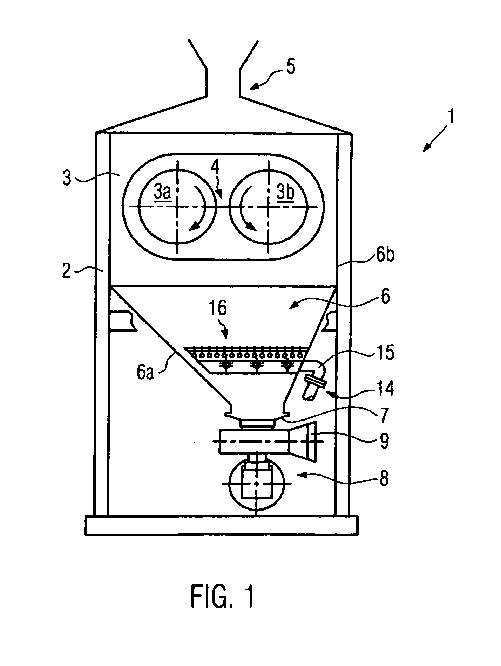

Fig. 1 zeigt in stark schematisierter, geschnittener Teildarstellung eine Nassschrotmühle 1, die bis auf die nachfolgend beschriebenen, erfindungsgemäßen Einzelheiten eine Nassschrotmühle irgendeiner herkömmlichen Bauart sein kann. Die Nassschrotmühle 1 enthält einen Gehäuserahmen 2, in dem ein Quetschwerk 3 angeordnet ist. Das Quetschwerk 3 kann von jeder herkömmlichen Bauart sein, wobei im dargestellten Ausführungsbeispiel zwei Quetschwalzen 3a und 3b vorgesehen sind, die sich unter Ausbildung eines Mahlspaltes 4 horizontal gegenüberliegen und um im Wesentlichen horizontal liegende Achsen gegenläufig zueinander angetrieben werden.

Oberhalb des Mahlspaltes 4 befindet sich eine Einfülleinrichtung 5, die ebenfalls herkömmlicher Art sein kann. Wird die erfindungsgemäße Nassschrotmühle beispielsweise zum Schroten von vorgeweichtem Malz für die Bierherstellung verwendet, so kann die Einfülleinrichtung 5 der Auslass einer Speisewalze eines Malzrumpfes sein, die vorgeweichtes Malz (oder anderes zu schrotendes Gut) gleichmäßig in Längsrichtung über den Mahlspalt 4 verteilt.

Unterhalb des Quetschwerkes 3 enthält die Nassschrotmühle 1 einen Aufnahmeraum 6 für das aus dem Quetschwerk 3 heraus fallende Schrotgut. Der Aufnahmeraum 6 wird hauptsächlich durch einen Trichter 6a gebildet, an den sich in Richtung auf das Quetschwerk 3 senkrechte Wände 6b anschließen können. Die senkrechten Wände 6b und der obere Rand des Trichters 6a schließen eine horizontale Querschnittsfläche ein, die wenigstens über die Abmessungen des Mahlspaltes 4 des Quetschwerkes 3 reicht. Im dargestellten Ausführungsbeispiel reicht dies Querschnittsfläche über die gesamte Ausdehnung der Quetschwalzen 3a, 3b, so dass auch Schrotgut aufgefangen werden kann, das zunächst an den Quetschwalzen 3a, 3b haften bleibt und erst später herab fällt. Gegebenenfalls kann ein (nicht gezeichneter) Abstreifer für die Quetschwalzen vorgesehen sein.

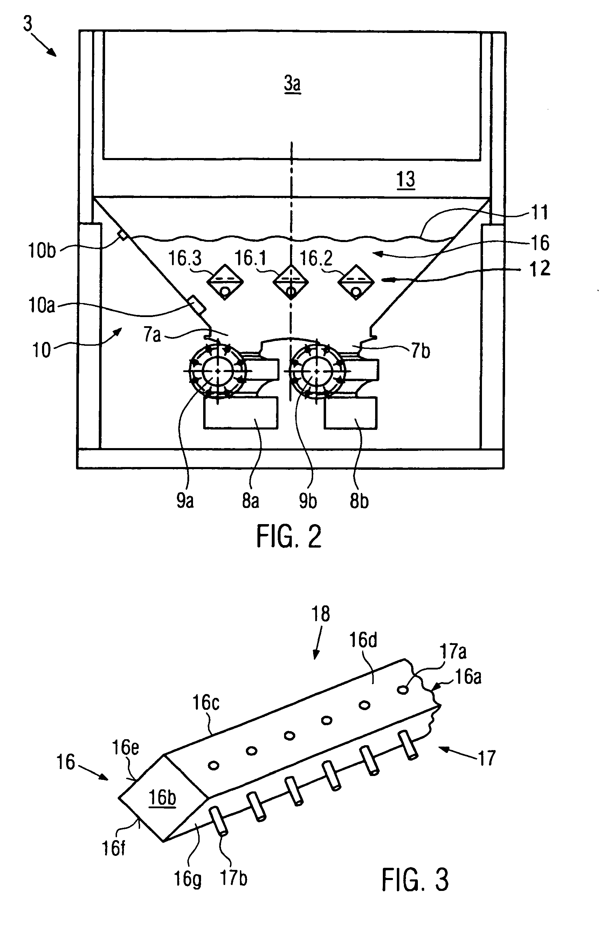

Der Trichter 6a verjüngt sich mit zunehmendem Abstand vom Quetschwerk 3 und mündet an seiner tiefsten Stelle in wenigstens einer Auslassöffnung 7. Im in Fig. 2 dargestellten Ausführungsbeispiel sind zwei Auslassöffnungen 7a und 7b vorgesehen, die entlang der Erstreckung des Mahlspaltes 4 in gleicher horizontaler Ebene beabstandet nebeneinander liegen. Der Trichter 6a kann jede gewünschte Form annehmen, im dargestellten Ausführungsbeispiel hat der Trichter 6a eine langgestreckte oval bis rechteckige Querschnittsform und Seitenwandungen unterschiedlicher Neigung.

Jeder Auslassöffnung 7 ist ein Förderorgan 8 zugeordnet, wobei im Falle zweier Auslassöffnungen 7a, 7b zwei Förderorgan 8a, 8b vorgesehen sind, die bevorzugt identisch ausgebildet sind.

Als Förderorgan 8 kann jede geeignete, bekannte Fördereinrichtung und insbesondere die üblichen für diese Zwecke eingesetzten Pumpen verwendet werden. Im dargestellten Ausführungsbeispiel wird eine Kreiselpumpe mit einem Kanallaufrad oder einem offenen Laufrad verwendet, die in einen Abpumpleitung 9 bzw. 9a, 9b pumpt. Oberhalb des Förderorgans 8, im Trichter 6a, kann ein Inducer (nicht dargestellt) vorgesehen sein, der das Einbringen des Schrotgutes in die Auslassöffnung 7 und das Förderorgan 8 erleichtert und verbessert.

Die erfindungsgemäße Nassschrotmühle 1 ist so ausgebildet, dass das das Quetschwerk 3 verlassende Schrot durch Schwerkrafteinfluss in und durch den Aufnahmeraum 6 fällt und sich oberhalb der Auslauföffnung ansammelt und staut, von wo es durch das Förderorgan 8 bei Bedarf abgezogen werden kann. Die Füllhöhe des Schrots im Aufnahmeraum 6 wird durch eine Niveauregulierung 10 (Fig.2) festgelegt und überwacht. Die Niveauregulierung 10 enthält eine Einrichtung 10a, mit der eine Normalfüllstandshöhe 11 im Aufnahmeraum 6 definiert wird. Die Einrichtung 10a enthält bevorzugt eine Druckmessdose, mit der die Normalbefüllung des Aufnahmeraums festgelegt und überwacht wird. Die Niveauregulierung 10 kann weiterhin eine Einrichtung 10b enthalten, die sicherstellt, dass der Füllstand im Aufnahmeraum 6 ein bestimmtes Niveau nicht übersteigt, damit das Quetschwerk 3 noch korrekt arbeiten kann (Vollmeldung).

Die Normalfüllstandslinie 11 begrenzt einen Sammelbereich 12 im Inneren des Aufnahmeraumes 6 nach oben, d.h. in Richtung auf das Quetschwerk 3. Im dargestellten Ausführungsbeispiel liegt die Normalfüllstandslinie 11 im Bereich des Trichters 6a. Bevorzugt liegt die Normalfüllstandslinie 11 geringfügig unterhalb des größten Querschnittes des Trichters 6a, am Übergang zu den senkrechten Begrenzungen 6b, insbesondere etwa im oberen Drittel bis im oberen Viertel des Trichters 6a. Die den Sammelraum 12 begrenzende Füllstandslinie 11 sollte weiterhin einen Abstand zum Quetschwerk 3 aufweisen, der zu einem ausreichend geräumigen Kopfraum 13 führt, in dem das Schrot aus dem Quetschwerk 3 ungehindert durch Schwerkraft nach unten fallen kann, so dass es sich nicht in das Quetschwerk 3 rückstaut.

Die Nassschrotmühle 1 enthält weiterhin eine Wassereinlasseinrichtung 14 zum Einleiten von Wasser unter Druck. Die Wassereinlasseinrichtung enthält eine Zufuhrleitung 15 und einen Verteiler 16 mit wenigstens einer Auslassöffnung 17.

Der Verteiler 16 ist im Sammelraum 12, d.h. inmitten des sich dort ansammelnden Schrotguts angeordnet. Der Verteiler 16 befindet sich im Trichter 6a des Aufnahmeraums. Der Verteiler 16 befindet sich in der Nähe der Auslauföffnung(en) 7 und im Falle von mehreren Auslauföffnungen 7a, 7b symmetrisch zu diesen. Der Verteiler 16 befindet sich in jedem Falle an einer Stelle, wo er im Normalbetrieb (d.h. außer beim Anfahren und beim vollständigen Entleeren der Nassschrotmühle 1) zumindest im Bereich seiner Auslassöffnung von Schrot bedeckt wird.

Der Verteiler 16 enthält wenigstens eine lang gestreckte Verteilerleitung 16.1, 16.2, 16.3, die sich im Wesentlichen horizontal von einer Wandung des Trichters 6a in Richtung auf die gegenüberliegende Wandung erstreckt, und die durch die Wasserleitung 15 von einer ihrer Stirnseiten 16a mit Wasser versorgt wird, während die gegenüberliegende Stirnseite 16b geschlossen oder auch mit einer oder mehreren Auslassöffnungen versehen ist, und an oder kurz vor der dem Leitungsdurchbruch der Wasserleitung 15 gegenüberliegenden Wandung des Trichters 6a endet. Im dargestellten Ausführungsbeispiel sind drei Verteilerleitungen 16.1, 16.2, 16.3 vorgesehen, die gleichmäßig im Sammelbereich 12 verteilt sind. Dabei befindet sich die mittlere Verteilerleitung 16.2 bevorzugt in der Mitte über den zwei Auslassöffnungen, während sich die beiden anderen jeweils seitlich über und neben der Mittellinie der Auslassöffnungen 7a, 7b befinden.

Die Verteilerleitung 16.1, 16.2, 16.3 weist einen (recht)winkligen oder kastenförmigen Querschnitt, bevorzugt einen quadratischen Querschnitt auf, kann aber auch andere Querschnittsformen aufweisen und z. B. rautenförmig, dreieckig, abgerundet, kreisförmig, oval oder tropfenförmig sein. Die Verteilerleitung 16.1, 16.2, 16.3 ist derart angeordnet, dass sie sich quer zum Mahlspalt 4 erstreckt. Die Verteilerleitung 16.1, 16.2, 16.3 liegt bevorzugt so im Sammelraum 12, d.h. dass eine Kante des Querschnittes oder eine andere Erhebung, im dargestellten Ausführungsbeispiel die Kante 16c, in Richtung auf das Quetschwerk 3 weist und die Oberseite der Verteilerleitung 16.1, 16.2, 16.3 bildet. Die sich an die Kante 16c anschließenden Seitenflächen 16d und 16e bilden somit zusammen mit der Kante 16c einen Abweiser 18, der dafür sorgt, dass kein Schrot auf der Verteilerleitung 16.1, 16.2, 16.3 liegen bleibt. Im Falle eines quadratischen Querschnitts liegt bevorzugt eine der Diagonalen im Wesentlichen in einer horizontalen Ebene und die andere Diagonale im Wesentlichen in einer vertikalen Ebene.

Der Verteiler 16 ist mit einer Vielzahl von Auslassöffnungen 17 versehen. Die Auslassöffnungen 17 weisen nach oben und/oder nach unten, wobei zumindest die nach oben weisenden Auslassöffnungen 17 bevorzugt schräg in eine Richtung weisen, die einen von 90° abweichenden Winkel zur Vertikalen einschließt. Im dargestellten Ausführungsbeispiel sind die Auslassöffnungen 17 über alle Seitenwände der Verteilerleitung 16.1, 16.2, 16.3, d.h. sowohl über die nach oben, d.h. in Richtung Quetschwerk 3 weisenden Seitenwände 16d und 16e als auch über die nach unten, d.h. in Richtung Förderorgan 8, weisenden Seitenwände 16f und 16g verteilt. Die Auslassöffnungen 17 sind bevorzugt in einer oder mehreren Reihen auf den Seitenwänden 16d bis 16g angeordnet, können jedoch auch regellos oder in anderen Mustern verteilt sein.

Im dargestellten Ausführungsbeispiel enthält der Verteiler 16 zwei Gruppen von Auslassöffnungen 17. Die erste Gruppe 17a der Auslassöffnungen 17 weist nach oben, ist demzufolge auf den nach oben weisenden Seitenwänden 16d und 16e vorgesehen. Die Auslassöffnungen 17 dieser Gruppe 17a sind als einfache Löcher mit einem Auslassquerschnitt ausgebildet, der auf den verfügbaren Wasserdruck (beispielsweise Druck des üblichen Brauwassernetzes) so abgestimmt ist, dass ein Verstopfen der Auslassöffnungen der Gruppe 17a durch Schrot oder ein Eindringen des Schrotes in den Verteiler 16 verhindert wird. Die Auslassöffnungen 17 der zweiten Gruppe 17b weisen nach unten, sind demzufolge an den nach unten weisenden Seitenflächen 16f, 16g vorgesehen. Diese sind düsenartig und bevorzugt an Vorsprüngen ausgebildet, so dass sie in der Lage sind, gerichtete Wasserstrahlen zu erzeugen. Die durch die Gruppe 17b erzeugten Wasserstrahlen sind in Richtung auf die Auslassöffnung(en) 7 gerichtet, so dass dadurch auch kleinere Verklumpungen aufgelöst werden können. Der Ausflussquerschnitt der Auslassöffnungen der Gruppe 17b ist größer als der Ausflussquerschnitt der Auslassöffnungen der Gruppe 17a.

Im Betrieb wird das zu schrotende Gut, beispielsweise vorgeweichtes Malz bei der Bierherstellung, über die Einlasseinrichtung 5 in das Quetschwerk 3 eingeführt, bevorzugt unter Schwerkrafteinfluss. Im Quetschwerk 3 wird das Gut geschrotet und gelangt durch den Mahlspalt 4 in den Aufnahmeraum 6. Dort fällt es wiederum unter Schwerkrafteinfluss nach unten und wird im Sammelraum 12 für ein nachfolgendes Abziehen durch das oder die Förderorgane 8 angesammelt, bis die Normalfüllstandslinie 11 erreicht ist. Spätestens jetzt, bevorzugt jedoch bereits während des Ansammelns, wird über die Wassereinleiteinrichtung 14 Wasser eingeleitet. Durch die Anordnung des Verteilers 16 im Inneren des angesammelten Schrotgutes wird dieses von innen her befeuchtet, wobei gegenüber dem Stand der Technik eine wesentlich intensivere Befeuchtung des Schrotgutes möglich wird, so dass Förderprobleme beim Abfördern über die Förderorgane, insbesondere bei der Verwendung von Pumpen, nicht mehr zu befürchten sind.

Aus den vorangegangenen Erläuterungen ergibt es sich, dass die Geometrie des Verteilers und insbesondere sein(e) Querschnitt(e) an die spezielle Konstruktion und Geometrie der Nassschrotmühle angepasst werden sollte. So sollten die nach unten weisenden Auslassöffnungen 17 des Verteilers bevorzugt in Richtung auf die Auslassöffnungen 7 des Aufnahmeraums 12 ausgerichtet sein, was im Falle nur einer einzigen Auslassöffnung 7 im Aufnahmeraum bedeutet, dass entweder die düsenartigen Vorsprünge der Gruppe 17b schräg an der Seitenfläche des rechteckigen Verteilers 16 gemäß Fig. 3 angeordnet sind oder der Verteiler 3 beispielsweise einen dreieckigen Querschnitt mit im Wesentlichen horizontaler unterer Seitenfläche aufweist, von der die düsenartigen Auslassöffnungen der zweiten Gruppe vorstehen. Weiterhin kann die Normalfüllstandslinie an beliebiger Stelle im Aufnahmeraum vorgesehen sein, wobei jedoch der Verteiler 16 immer unterhalb der Normalfüllstandslinie angeordnet ist. Es ist weiterhin zweckmäßig, den Verteiler relativ nahe an der oder den Auslassöffnungen 7 des Aufnahmeraums anzuordnen, da dort diejenige Stelle ist, bei der bei einer mangelhaften Befeuchtung des Schrotgutes die größte Gefahr von Verklumpungen oder Brückenbildung auftritt. Die Wassereinleiteinrichtung 14 kann weiterhin zusätzliche, bekannte Wasserverteiler enthalten, beispielsweise in Form einfacher Wassertaschen, die Wasser von oberhalb der Füllstandslinie an den Trichterwänden herab laufen lassen.

Die erfindungsgemäße Nassschrotmühle ist zwar speziell zum Schroten von Malz für die Bierbereitung ausgebildet, kann jedoch auch für andere Schrotaufgaben verwendet werden. Als Abweiser können gesonderte Bauelemente eingesetzt werden. Statt Verteilerleitungen kann der Verteiler beispielsweise punktförmig angeordnete Verteilerköpfe oder dergleichen enthalten.

## Patentansprüche

1. Nassschrotmühle (1) mit einer Quetscheinrichtung (3), einem unterhalb der Quetscheinrichtung (3) vorgesehenen Aufnahmeraum (6) und einem sich an den Aufnahmeraum (6) anschließenden Förderorgan (8) für Schrotgut, und mit einer Wassereinlasseinrichtung (14) in den Aufnahmeraum (6), wobei der Aufnahmeraum (6) einen in Strömungsrichtung vor dem Förderorgan (8) liegenden Sammelbereich (12) für Schrotgut aufweist, der nach oben durch eine Normalfüllstandslinie (11) begrenzt ist, wobei die Wassereinlasseinrichtung (14) einen im Sammelbereich (12) des Aufnahmeraums (6) angeordneten Verteiler (16) mit einer Gruppe (17a) von nach oben weisenden Auslassöffnungen (17) für Wasser unter Druck enthält.

2. Nassschrotmühle nach Anspruch 1, **dadurch gekennzeichnet, dass** der Verteiler (16) wenigstens eine sich im wesentlichen horizontal in den Aufnahmeraum (6) hinein erstreckende Verteilleitung (16.1,16.2, 16.3) enthält.

3. Nassschrotmühle nach Anspruch 1 oder 2, **dadurch gekennzeichnet, dass** der Aufnahmeraum (6) einen Trichter (6a) aufweist, in dem der Verteiler (16) angeordnet ist.

4. Nassschrotmühle nach einem der Ansprüche 1 bis 3, **dadurch gekennzeichnet, dass** der Verteiler (16) mit einer Gruppe (17a) von nach oben und einer Gruppe (17b) von nach unten weisenden Auslassöffnungen (17) versehen ist.

5. Nassschrotmühle nach Anspruch 4, **dadurch gekennzeichnet, dass** die nach oben weisenden Auslassöffnungen (17a) einen kleineren Auslassquerschnitt aufweisen, als die nach unten weisenden Auslassöffnungen (17b).

6. Nassschrotmühle nach einem der Ansprüche 1 bis 5, **dadurch gekennzeichnet, dass** der Verteiler (16) an seiner der Quetscheinrichtung (3) zugewandten Oberseite einen Abweiser (18) aufweist.

7. Nassschrotmühle nach einem der Ansprüche 1 bis 6, **dadurch gekennzeichnet, dass** der Verteiler (16) einen mit einer Kante (16c) nach oben stehenden, bevorzugt im wesentlichen quadratischen, Querschnitt aufweist.

8. Nassschrotmühle nach einem der Ansprüche 1 bis 7, **dadurch gekennzeichnet, dass** dem Aufnahmeraum (6) eine Mehrzahl nebeneinander angeordneter Förderorgane (8) zugeordnet sind, und der Verteiler (16) symmetrisch zu den Förderorganen (8) angeordnet ist.

9. Verfahren zum Nassschroten, wobei zu schrotendes Gut einer Quetscheinrichtung (3) zugeführt, und das Schrot mit Wasser vermischt wird, sich in einem Sammelbereich (12) absetzt und durch ein Förderorgan (8) abgezogen wird, wobei das Wasser nach oben gerichtet in das Innere der im Sammelbereich (12) abgesetzten Schrotmenge eingespritzt wird.

10. Verfahren nach Anspruch 9, **dadurch gekennzeichnet, dass** das Wasser in einem Winkel zur Vertikalen in das Schrot eingespritzt wird.

## Claims

1. Wet grist mill (1) having a crushing device (3), a receiving space (6) which is provided below the crushing device (3), and a delivery element (8) for grist material, which delivery element (8) adjoins the receiving space (6), and having a water inlet device (14) into the receiving space (6), the receiving space (6) having a collecting region (12) for grist material, which collecting region (12) lies in front of the delivery element (8) in the flow direction and is delimited at the top by a normal filling-level line (11), the water inlet device (14) comprising a distributor (16) which is arranged in the collecting region (12) of the receiving space (6) and has a group (17a) of upwardly pointing outlet openings (17) for water under pressure.

2. Wet grist mill according to Claim 1, **characterized in that** the distributor (16) comprises at least one distributor line (16.1, 16.2, 16.3) which extends substantially horizontally into the receiving space (6).

3. Wet grist mill according to Claim 1 or 2,
**characterized in that** the receiving space (6) has a funnel (6a), in which the distributor (16) is arranged.

4. Wet grist mill according to one of Claims 1 to 3, **characterized in that** the distributor (16) is provided with a group (17a) of upwardly pointing outlet openings (17) and a group (17b) of downwardly pointing outlet openings (17).

5. Wet grist mill according to Claim 4, **characterized in that** the upwardly pointing outlet openings (17a) have a smaller outlet cross section than the downwardly pointing outlet openings (17b).

6. Wet grist mill according to one of Claims 1 to 5,
**characterized in that** the distributor (16) has a deflector (18) on its upper side which faces the crushing device (3).

7. Wet grist mill according to one of Claims 1 to 6, **characterized in that** the distributor (16) has a cross section which stands upwards with an edge (16c) and is preferably substantially square.

8. Wet grist mill according to one of Claims 1 to 7, **characterized in that** the receiving space (6) is assigned a plurality of delivery elements (8) which are arranged next to one another, and the distributor (16) is arranged symmetrically with respect to the delivery elements (8).

9. Method for wet grist milling, material to be shredded being fed to a crushing device (3), and the grist being mixed with water, being deposited in a collecting region (12) and being drawn off through a delivery element (8), the water being sprayed in a manner which is directed upwards into the interior of the quantity of grist which has been deposited in the collecting region (12).

10. Method according to Claim 9, **characterized in that** the water is sprayed into the grist at an angle from the vertical.

## Revendications

1. Moulin concasseur pour gruau humide (1) comprenant un dispositif de broyage (3), une chambre de réception (6) prévue au-dessous du dispositif de broyage (3) et un organe de transport (8) pour du gruau concassé, se raccordant à la chambre de réception (6), ainsi qu'un dispositif d'admission d'eau (14) dans la chambre de réception (6), la chambre de réception (6) présentant une zone de collecte (12) pour du gruau concassé, située dans la direction d'écoulement en amont de l'organe de transport (8) et délimitée vers le haut par une ligne de niveau de remplissage normal (11), le dispositif d'admission d'eau (14) comportant un répartiteur (16), disposé dans la zone de collecte (12) de la chambre de réception (6), avec un groupe (17a) d'orifices d'échappement (17), orientés vers le haut, pour de l'eau sous pression.

2. Moulin concasseur pour gruau humide suivant la revendication 1, **caractérisé en ce que** le répartiteur (16) comporte au moins une conduite de distribution (16.1, 16.2, 16.3), qui s'étend essentiellement de manière horizontale dans la chambre de réception (6).

3. Moulin concasseur pour gruau humide suivant l'une des revendications 1 et 2, **caractérisé en ce que** la chambre de réception (6) présente un entonnoir (6a), dans lequel est disposé le répartiteur (16).

4. Moulin concasseur pour gruau humide suivant l'une des revendications 1 à 3, **caractérisé en ce que** le répartiteur (16) est muni d'un groupe (17a) d'orifices d'échappement (17) dirigés vers le haut et d'un groupe (17b) d'orifices d'échappement (17) dirigés vers le bas.

5. Moulin concasseur de gruau humide suivant la revendication 4, **caractérisé en ce que** les orifices d'échappement (17a), dirigés vers le haut, présentent une section transversale d'échappement plus petite que celle des orifices d'échappement (17b) dirigés vers le bas.

6. Moulin concasseur de gruau humide suivant l'une des revendications 1 à 5, **caractérisé en ce que** le répartiteur (16) présente un déflecteur (18) sur son côté supérieur tourné vers le dispositif de broyage (3).

7. Moulin concasseur de gruau humide suivant l'une des revendications 1 à 6, **caractérisé en ce que** le répartiteur (16) présente une section transversale avec une arête (16c) vers le haut, de préférence essentiellement carrée.

8. Moulin concasseur de gruau humide suivant l'une des revendications 1 à 7, **caractérisé en ce qu'**une pluralité d'organes de transport (8) juxtaposés est associée à l'espace de réception (6), et le répartiteur (16) est disposé symétriquement par rapport aux organes de transport (8).

9. Procédé pour concassage de gruau humide, dans lequel du produit à concasser est conduit à un dispositif du broyage (3), et le gruau concassé est mélangé à de l'eau, se dépose dans une zone de collecte (12) et est soutiré par un organe de transport (8), l'eau étant injectée en direction du haut dans l'intérieur de la quantité de gruau concassé déposée dans la zone de collecte (12).

10. Procédé suivant la revendication 9, **caractérisé en ce que** l'eau est injectée dans le gruau concassé sous un angle par rapport à la verticale.
